# EUROPEAN PATENT SPECIFICATION

(11) **EP 2 270 941 B1**
(45) Date of publication and mention of the grant of the patent: **01.03.2017**
(21) Application number: 10166615.4
(22) Date of filing: 21.06.2010
(51) Int. Cl.: H02G 3/12, H02G 3/14

(54) **Snap assembly for flush mount fixture**
Einrastanordnung zur flächenbündigen Befestigung
Ensemble de bouton-pression pour accessoire encastré

(30) Priority: 29.06.2009 IN CH15292009
(43) Date of publication of application: 05.01.2011
(73) Proprietor: Schneider Electric Industries SAS, 92500 Rueil-Malmaison (FR)
(72) Inventor: Ramakrishnan, Vasudevan, 560084, Bangalore (IN); Sharma, Suneet, 283104, Bah-Agra, UP (IN); Nataraj, Saravana, 570014, Karnataka (IN)
(74) Representative: Groth & Co. KB

(56) References cited:
- ES-A1- 2 205 995

## Description

### Field of the Invention:

The present disclosure relates to devices used in the mounting of electrical and communications components and the like on structures, and more specifically to a flush mount fixture with a snap assembly.

### Background of the Invention:

In the mounting of fixtures like switches, receptacles and the like in the interior of buildings, it is a common practice to mount these electrical junction boxes to the wall, ceiling or other members of the building's structure. Flush-mount boxes give the appearance of being attached to the surface of the building and do not require attachment to a stud or other building frame member and yet they are secure and esthetically acceptable. The Flush Mount backs can be recessed into concrete block construction or mounted back-to-back in existing non-contact visitation windows to maximize the use of available space. The fixtures may either be electrical such as switches, plug points or network related such as Ethernet cable receptacle etc.

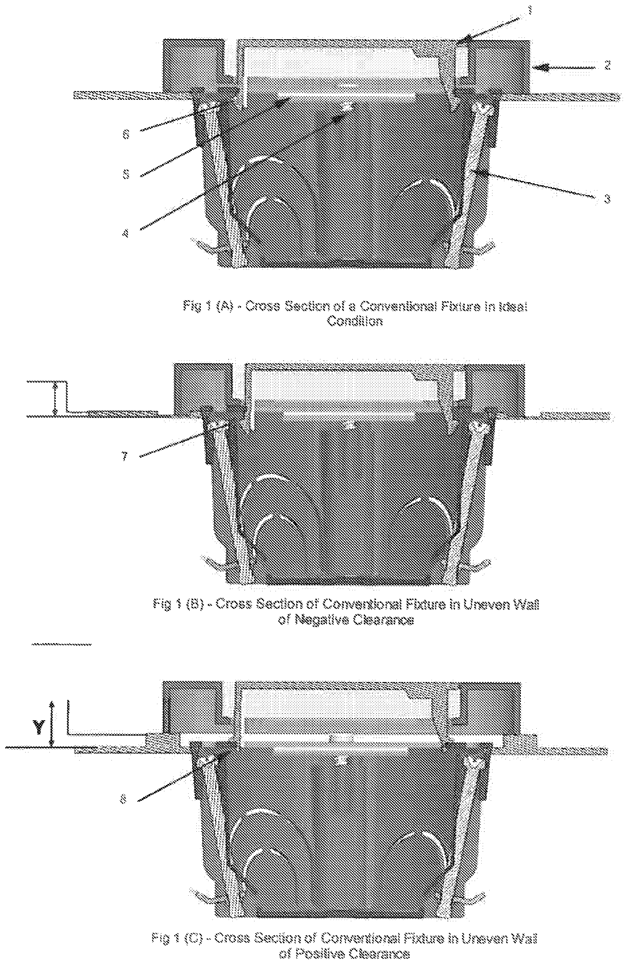

Figure 1 (a) describes the conventional flush mount fixture in ideal condition. The fixture assembly consists of a flush mount box (3), fixing frame (5), center plate (1) and outer frame (2). The flush mount box is embedded onto the wall and closed with a fixing frame. The fixing frame is fastened to the flush mount box by a fastening means such as a screw (4) as per the present embodiment. However it is possible that the fixing frame is fixed on the wall itself.. The center plate (also called the face plate or end plate) can be covered plate or may contain switches or the like. The outer frame is placed on to the fixing frame and is held by the center plate snapfit to the fixing frame to provide flush finishing. The center plate contains snap engagement on the ends of the plate to enable fasten it to the fixing frame. This snap engagement is fixed and therefore the placement should be perfect to enable a proper fixing for sturdiness and aesthetic value. In ideal condition, where the walls are smooth the flush mount fixture can be assembled easily without any problem, however on uneven walls these do not properly fit and such unevenness either leaves gaps or is not properly fitted leading to protrusion of the fixtures outside the wall.

Fig 1 (b) describes a conventional flush mount fixture where the wall is uneven, In this scenario the wall around the frame is recessed and the flush mount box and the frame are protruding above the surface of the wall. The snaps (7) on the end plate do not provide the required fastening as there is a clearance which arises due to the difference in the height of the frame and the flush mount box. This clearance gives rise to a play and thus loosening of the center plate with the outer frame.

Fig 1 (c) describes another scenario of the conventional flush mount fixture where the wall around the frame is protruding out leading to a protruding outer frame and the flush mount box and the frame is recessed below the surface of the wall. The snaps (8) on the center plate do not provide the properly fasten with the flush mount box and the fixing frame as the snaps do not completely reach the required level for a perfect snap and thus is not fitted properly to the fixing frame.

Therefore there is a need for a snap design to accommodate the unevenness in the wall and provide for proper fitting.

D1 discloses a snap assembly for a flush mount fixture in which a number of serrated snap fixtures are used to attach the frame to the wall-mounted box.

### Summary of the Invention:

The present disclosure provides a novel and inventive design of a snap assembly on the center plate snap which can accommodate the unevenness in the wall and fixture.

The present disclosure defines a snap assembly on an center plate of a flush mount fixture, the center plate being snap fitted with a fixing plate on a flush mount box, the assembly comprising plurality of snap members positioned adjacent to each other wherein at least one said snap member having serration on the outer surface of the member and the serrated surface being outwardly inclined from a desired position on the member leading towards the top end of the member. The snap assembly also comprises non-serrated snap members having protrusion on the outer surface of the member to enable positive locking of the center plate with the fixing frame on the flush mount box, The serrated snap members on snap assembly provide grip between the center plate and fixing frame.

The present disclosure also defines a flush mount fixture comprising a flush mount box embedded onto the wall, a fixing frame connected to the flush mount box by a fastening means, a center plate being snapped to fixing frame on the flush mount box and a outer frame fastened to the fixture by means of the center plate to enable flush finishing, wherein the said center plate is fastened to the fixing frame by means of a snap assembly comprising plurality of snap members positioned near each other wherein at least one said snap member having serration on the outer surface of the member and the serrated surface being outwardly inclined from a desired position on the member leading towards the top end of the member. The serrated snap members on the snap assembly provide griping between the center plate and fixing frame.

### Brief Description of Drawings:

Figure 1 (a) describes a cross section diagram of a conventional fixture in ideal condition. Figure 1 (b) describes a cross section diagram of a conventional fixture in uneven wall of negative clearance
Figure 1 (c) describes a cross section diagram of a conventional fixture in uneven wall of positive clearance
Figure 2 describes a view of the center plate with the snap assembly in accordance to the present invention
Figure 3 (a) describes a cross section diagram of fixture with the snap according to the present invention in an ideal condition.
Figure 3 (b) describes a cross section diagram of fixture with the snap according to the present invention in uneven wall of negative clearance.
Figure 3 (c) describes a cross section diagram of fixture with the snap according to the present invention in uneven wall of positive clearance.
Figure 4 (a) & 4 (b) describes a cross section view of the flush mount assembly with the snap assembly.

### Detailed Description:

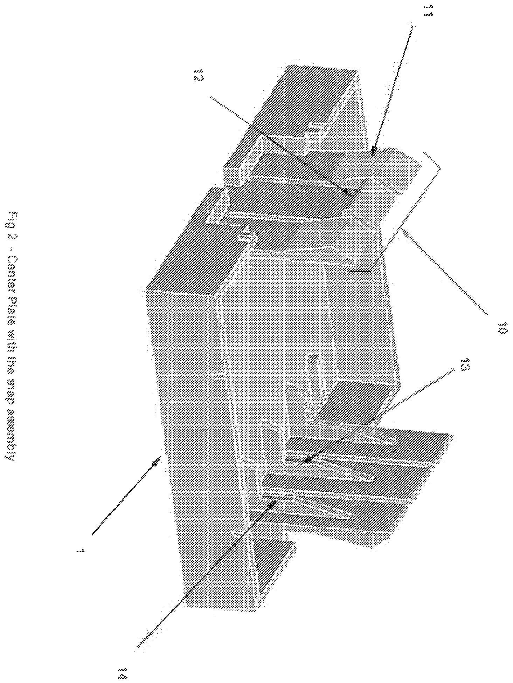

Figure 2 defines a novel design for a center plate (1) with an adjustable snap fitting design. The center plate contains plurality of snaps placed together to form an assembly. This assembly is positioned at the two opposite sides on the center plate. The snap members can also be placed at all four ends also for a strong hold; however the present disclosure defines an embodiment with snap members on two sides.

The snap assembly has plurality of snap members (10) where at least one of the snap members has serration (11) towards the outer end as shown in the figure 2. These serrations help in maintaining good grip between fixing frame and center plate. The serrations on the outside are on an inclined surface of the snap member. The outer surface of the serrated snap members has inclined faces with the serrations on them.
The outward inclination of the faces are from a predefined position on the outer face, inclined towards the outside to form an angular inclination as it goes towards the top end. The top end may end with a sharp inward inclination. The present embodiment of snap assembly provides three snap members with two serrated members and one non-serrated. However they can also be designed with plurality of such serrated members and plurality of non serrated members.

The non-serrated members have sharp protrusion (12) in the outward direction. This protrusion forms a locking means providing positive locking with the fixing frame and thus fastens the center plate with the fixing frame. The non-serrated snap member protrudes a little the outside the serrated members to enable locking.

In the present disclosure the middle snap member is a non serrated member and has a protrusion to enable locking.

The snap assembly contains ribs placed on the inside which supports the snap member with the center frame. The ribs are placed between the inner surface of the said members and the floor of the center plate. These ribs provide tensile strength to the snap members. Amount of deflection undergoing by snap member is proportional to the tensile strength provided by the ribs. The ribs on the serrated and non-serrated snaps are different so the stress developed is also different. The ribs (14) on the serrated snaps are designed sturdy to facilitate good holding between the center plate and the fixing frame. However the ribs (13) on the non serrated snap members are comparably flexible to enable them undergo more deformation and facilitate easy installation and removal. The pullout force is defined as the force required for removal of the center plate from the fixing frame. The more flexible the rib on the non-serrated locking snaps the lower the pullout force. Therefore the positive locking and pull out force can be easily adjusted with the help of rib design.

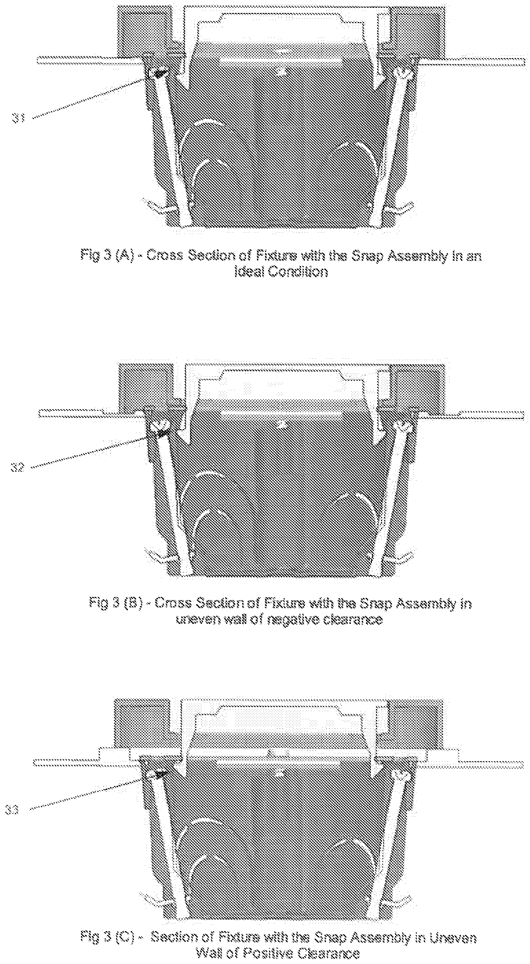

Figure 3 (a) describes a cross section diagram of fixture with the snap assembly in accordance with the present invention during an ideal condition. In this condition the snap members (31) are at an optimum distance and fixes with the center plate.

Figure 3 (b) describes a cross section diagram of fixture with the snap according to the present invention on an uneven wall with negative clearance. In this scenario the snap assembly (32) with the serrations on the serrated snap members are engaged with the fixing plate and thus at an optimum level they are stable to negate the positive clearance. These serrated snap members provide griping and holds the center plate to the fixing frame. The non serrated snap member with a protrusion acts as a locking means to avoid removal from the fixing frame by providing a positive locking. Therefore the center plate is fixed to the fixing frame without any gap and there is a flush finish between the center plate and the fixing frame.

Figure 3 (c) describes a cross section diagram of fixture with the snap according to the present invention in uneven wall of positive clearance, In this scenario the snap members (33) with the serrations on the serrated snap members are engaged with the fixing plate and thus at an optimum level they are stable. These serrations extent to a level such that it provides for grip at that extent. These serrated snap members provide gripping and hold the center plate to the fixing frame. The non serrated snap member with a protrusion acts as a locking means to avoid removal from the fixing frame by providing a positive locking. Therefore the center plate is fixed to the fixing frame without protrusion and there is a flush finish between the center plate and the fixing frame.

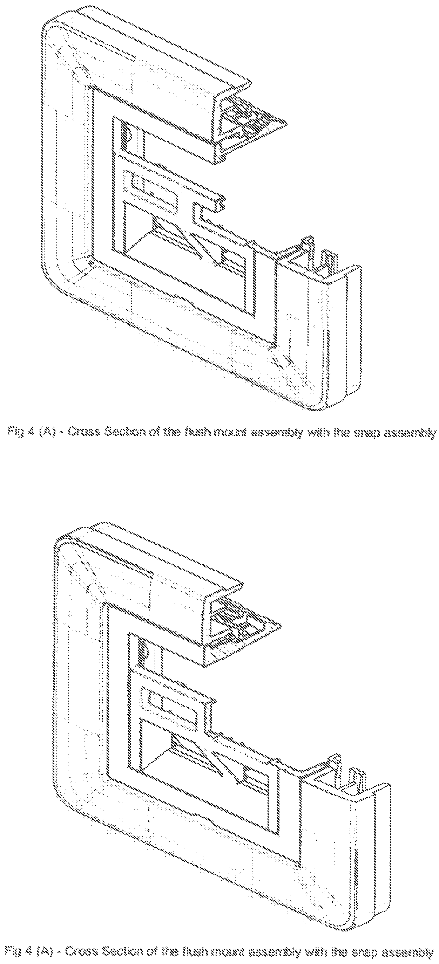

Figure 4 shows a cross section of the assembly with the snap assembly on the centre plate. Figure 4 (A) shows a section where the serrated snap is snapped to the frame. Figure 4 (B) shows a section where the non serrated snap is locked with the fixing frame.

One skilled in the art will understand that the embodiment of the present invention as shown in the drawings and described above is exemplary only and not intended to be limiting.

The foregoing description of the preferred embodiment of the present invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A snap assembly for a flush mount fixture, wherein the snap assembly is provided with a center plate (1) being snap fitted with a fixing plate,
**characterized in that**
the center plate comprises two or more snap members (10, 31, 32, 33) positioned adjacent to each other wherein at least one of said snap members having serration (11) on the outer surface of the member and the serrated surface being outwardly inclined from a desired position on the member leading towards the top end of the member wherein the remaining snap members are non-serrated and having protrusion (12) on the outer surface of the member to enable positive locking of the center plate (1) with the fixing frame.

2. The snap assembly as claimed in claim 1 wherein the serrated snap members (10, 31, 32, 33) provide grip between the center plate (1) and fixing frame.

3. The snap assembly as claimed in claim 1 and 2, wherein the said snap members (10, 31, 32, 33) are supported by ribs (13, 14) placed between the inner surface of the said members (10, 31, 32, 33) and the floor of the center plate (1).

4. The snap assembly as claimed in claim 1 and 3, wherein the ribs on the said serrated snap members (10, 31, 32, 33) provide tensile strength designed to define holding strength between the center plate (1) and the fixing frames

5. The snap assembly as claimed in claim 1 and 3, wherein the ribs (13, 14) on the said non-serrated snap members provide tensile strength designed to define the pull out force.

6. A flush mount fixture comprising
a fixing frame connected to the flush mount box or the wall by a fastening means a center plate being snapped to fixing frame on the back box and
a outer frame fastened to the fixture by means of a center plate (1) to enable flush finishing, **characterizing in that**
the said center plate (1) is fastened to the fixing frame by means of a snap assembly having two or more snap members (10, 31, 32, 33) positioned adjacent to each other wherein at least one of said snap members (10, 31, 32, 33) having serration (11) on the outer surface of the member and the serrated surface being outwardly inclined from a desired position on the member leading towards the top end of the member wherein the remaining snap members of the snap assembly are non-serrated and having protrusion (12) to enable positive locking of the center plate (1) with the fixing frame.

7. The fixture as claimed in claim 6 wherein the snap assembly comprises serrated snap members (10, 31, 32, 33) to provide grip
between the center plate (1) and the fixing frame at a variable length to overcome unevenness on the wall.

8. The fixture as claimed in claim 6 or 7 wherein the snap members (10, 31, 32, 33) on the snap assembly are supported by ribs (13, 14) which provide tensile strength defined to provide optimum holding strength and pullout force.

## Patentansprüche

1. Einrastanordnung zur flächenbündigen Befestigung, wobei eine Einrastanordnung mit einer Mittelplatte (1) ausgestattet ist, die in eine Befestigungsplatte eingerastet wird,
**dadurch gekennzeichnet, dass** die Mittelplatte umfasst:
zwei oder mehr Einrastelemente (10, 31, 32, 33), die nebeneinander positioniert sind, wobei mindestens eines der Einrastelemente Zahnung (11) an der Außenfläche des Elements aufweist und die gezahnte Fläche von einer gewünschten Position auf dem Element, die zum oberen Ende des Elements hinführt, auswärts geneigt ist, wobei die verbleibenden Einrastelemente ungezahnt sind und Vorsprünge (12) an der Außenfläche des Elements aufweisen, um formschlüssige Arretierung der Mittelplatte (1) mit dem Befestigungsrahmen zu ermöglichen.

2. Einrastanordnung nach Anspruch 1, wobei die gezahnten Einrastelemente (10, 31, 32, 33) Griffigkeit zwischen der Mittelplatte (1) und dem Befestigungsrahmen_bereitstellen.

3. Einrastanordnung nach Anspruch 1 und 2, wobei die Einrastelemente (10, 31, 32, 33) von Rippen (13, 14) getragen werden, die zwischen der Innenfläche der Elemente (10, 31, 32, 33) und dem Boden der Mittelplatte (1) platziert sind.

4. Einrastanordnung nach Anspruch 1 und 3, wobei die Rippen an den gezahnten Einrastelementen (10, 31, 32, 33) Zugfestigkeit bereitstellen, die vorgesehen ist, um Haltekraft zwischen der Mittelplatte (1) und den Befestigungsrahmen zu definieren.

5. Einrastanordnung nach Anspruch 1 und 3, wobei die Rippen (13, 14) an den ungezahnten Einrastelementen Zugfestigkeit bereitstellen, die vorgesehen ist, um die Abziehkraft zu definieren.

6. Flächenbündige Befestigung, umfassend einen Befestigungsrahmen, der mittels eines Befestigungsmittels an die Unterputzdose oder die Wand gebunden ist,
eine Mittelplatte, die an dem Befestigungsrahmen an der Einbaudose eingerastet wird,
einen Außenrahmen, der an der Befestigung mittels einer Mittelplatte (1) festgemacht wird, um bündige Zurichtung zu ermöglichen, **dadurch gekennzeichnet, dass** die Mittelplatte (1) an dem Befestigungsrahmen mittels einer Einrastanordnung mit zwei oder mehr Einrastelementen (10, 31, 31, 32, 33) festgemacht ist, die nebeneinander positioniert sind, wobei mindestens eines der Einrastelemente (10, 31, 32, 33) Zahnung (11) an der Außenfläche des Elements aufweist und die gezahnte Fläche von einer gewünschten Position auf dem Element, die zum oberen Ende des Elements hinführt, auswärts geneigt ist, wobei die verbleibenden Einrastelemente der Einrastanordnung ungezahnt sind und Vorsprünge (12) aufweisen, um formschlüssige Arretierung der Mittelplatte (1) mit dem Befestigungsrahmen zu ermöglichen.

7. Befestigung nach Anspruch 6, wobei die Einrastanordnung gezahnte Einrastelemente (10, 31, 32, 33) umfasst, um Griffigkeit zwischen der Mittelplatte (1) und dem Befestigungsrahmen in einer variablen Länge bereitzustellen, um Unebenheit an der Wand zu überwinden.

8. Befestigung nach Anspruch 6 oder 7, wobei die Einrastelemente (10, 31, 32, 33) an der Einrastanordnung von Rippen (13, 14) gehalten werden, die Zugfestigkeit bereitstellen, die definiert ist, um optimale Haltekraft und Abziehkraft bereitzustellen.

## Revendications

1. Ensemble d'encliquetage pour accessoires encastrés, dans lequel l'ensemble d'encliquetage est pourvu d'une plaque centrale (1) ajustée par encliquetage avec une plaque de fixation,
**caractérisé en ce que** la plaque centrale comprend deux ou plus de deux organes d'encliquetage (10, 31, 32, 33) positionnés les uns à côté des autres, au moins l'un desdits organes d'encliquetage ayant une dentelure (11) sur la surface extérieure de l'organe et la surface dentelée étant inclinée vers l'extérieur depuis une position souhaitée sur l'organe conduisant vers l'extrémité supérieure de l'organe, les organes d'encliquetage restants n'étant pas dentelés et présentant une saillie (12) sur la surface extérieure de l'organe pour permettre un verrouillage positif de la plaque centrale (1) avec le cadre de fixation.

2. Ensemble d'encliquetage selon la revendication 1, dans lequel les organes d'encliquetage dentelés (10, 31, 32, 33) fournissent une prise entre la plaque centrale (1) et le cadre de fixation.

3. Ensemble d'encliquetage selon les revendications 1 et 2, dans lequel lesdits organes d'encliquetage (10, 31, 32, 33) sont supportés par des nervures (13, 14) placées entre la surface interne desdits organes (10, 31, 32, 33) et la base de la plaque centrale (1).

4. Ensemble d'encliquetage selon les revendications 1 et 3, dans lequel les nervures desdits organes d'encliquetage dentelés (10, 31, 32, 33) fournissent une résistance à la traction conçue pour définir une force de retenue entre la plaque centrale (1) et les cadres de fixation.

5. Ensemble d'encliquetage selon les revendications 1 et 3, dans lequel les nervures (13, 14) sur lesdits organes d'encliquetage non dentelés fournissent une résistance à la traction conçue pour définir la force d'extraction.

6. Accessoire encastré comprenant
un cadre de fixation connecté à la boîte d'encastrement ou au mur par un moyen d'attache, une plaque centrale encliquetée sur un cadre de fixation sur la boîte arrière et
un cadre externe attaché à l'accessoire au moyen d'une plaque centrale (1) pour permettre une finition en affleurement, **caractérisé en ce que** ladite plaque centrale (1) est attachée au cadre de fixation au moyen d'un ensemble d'encliquetage ayant deux ou plus de deux organes d'encliquetage (10, 31, 32, 33) positionnés les uns à côté des autres, au moins l'un desdits organes d'encliquetage (10, 31, 32, 33) ayant une dentelure (11) sur la surface extérieure de l'organe et la surface dentelée étant inclinée vers l'extérieur depuis une position souhaitée sur l'organe conduisant vers l'extrémité supérieure de l'organe, les organes d'encliquetage restants de l'ensemble d'encliquetage n'étant pas dentelés et ayant une saillie (12) pour permettre un verrouillage positif de la plaque centrale (1) avec le cadre de fixation.

7. Accessoire selon la revendication 6, dans lequel l'ensemble d'encliquetage comprend des organes d'encliquetage dentelés (10, 31, 32, 33) pour fournir une prise entre la plaque centrale (1) et le cadre de fixation avec une longueur variable pour surmonter un manque d'uniformité du mur.

8. Accessoire selon la revendication 6 ou 7, dans
lequel les organes d'encliquetage (10, 31, 32, 33) sur l'ensemble d'encliquetage sont supportés par des nervures (13, 14) qui fournissent une résistance à la traction définie pour fournir une force de retenue et une force d'extraction optimales.
